Europäisches Patentamt

European Patent Office

Office européen des brevets

(11) Publication number: **0 394 234 B1**

## EUROPEAN PATENT SPECIFICATION

(45) Date of publication of patent specification: **04.08.93**    (51) Int. Cl.5: **G01L 23/22**

(21) Application number: **88903829.5**

(22) Date of filing: **04.05.88**

(86) International application number:
**PCT/EP88/00370**

(87) International publication number:
**WO 89/11087 (16.11.89 89/27)**

(54) **METHOD OF DETECTING KNOCKING IN INTERNAL COMBUSTION ENGINES.**

(43) Date of publication of application:
**31.10.90 Bulletin  90/44**

(45) Publication of the grant of the patent:
**04.08.93 Bulletin  93/31**

(84) Designated Contracting States:
**DE FR GB**

(56) References cited:
**DE-A- 2 509 199**
**DE-A- 3 128 554**

**Patent Abstracts of Japan, vol. 11, no. 270, (P-611)(2717), 3 September 1987, & JP-A-6271823**

(73) Proprietor: **ROBERT BOSCH GMBH**
**Postfach 30 02 20**
**W-7000 Stuttgart 30(DE)**

(72) Inventor: **MOSER, Winfried**
**Grundweinberger 14**
**W-7140 Ludwigsburg(DE)**
Inventor: **BROSI, Thomas**
**Flurstrasse 13**
**W-7158 Sulzbach/Murr(DE)**

Rank Xerox (UK) Business Services
(3.10/3.6/3.3.1)

## Description

The present invention relates to the detection of knocking in internal combustion engines.

Known methods of detecting knocking include the measurement of pressure in, or sound from, the engine cylinders by means of appropriate detectors. However, it is difficult to distinguish the signals produced by the knocking from those which occur normally in the engine, and those methods are therefore normally unsatisfactory.

It is also known that during detonation of a fuel/air mixture in an engine, ions are produced and an ionic current can be detected by measuring the current across a probe gap (conveniently in the form of a spark plug) in a cylinder of the engine (Iinuma, K, "Studies of Engine Combustion Processes by Ionisation Current", Bull. of JSME , Vol. 4, No. 14, pages 352 to 357, 1961).

In the event of knocking occurring, high-frequency oscillations are set up in the ionic current. These oscillations are filtered and then interpreted to determine whether they contain features which are associated with knocking.

However, rotation of the engine distributor can lead to spark-overs in the distributor (due to residual energy in the ignition coil) even after decay of the ignition voltage. The spark-overs can cause diodes in the measuring circuit to switch over from a blocking state to a conducting state, producing a steep signal rise. The steep signal rise includes many frequencies, including those which are the same as those associated with knocking. Interference thus occurs, and it is often impossible to determine whether certain characteristics of the filtered signal result from knocking.

An improved method of detecting knocking in an internal combustion engine is known from the German Patent Disclosure Document DE-A 31 28 554. In order to eliminate from an ion current sensor signals which were not derived from knocking of the engine, the ion current sensor signal is evaluated by a high-pass-low-pass filter, to filter out signals of frequencies extraneous to knocking frequencies.

The filtered sensor signal is lead to two timing stages which are connected to a counter and operate as a digital filter. To inhibit the response of the circuit, further timing stages are connected to a3switch and to the counter and they open the switch or stop the counter when the ion current signal is smaller than a threshold value or when disturbance signals due to ignition events are sensed by a second sensor.

The known method is not able to suppres disturbances which have the same frequencies as knocking and which arise when the switch is closed.

It is an object of the present invention to provide a method of detecting knocking which is free from interference and spurious signals.

In accordance with the present invention, this is achieved by investigating a filtered signal relating to a property of combustion of the fuel to determine the occurrence of knocking only if all of a predetermined set of conditions of the unfiltered signal are found to be consistent with knocking.

One of the conditions is that the unfiltered signal has reached a threshold value. In addition, a second condition is that within a predetermined period after reaching the threshold value, the signal does not drop by a first critical amount and then rise by a second critical amount.

A further condition may be that the maximum signal is below a critical value, and/or whether the instant when the signal reaches a threshold current is before a critical value. A further condition may be that the period between the signal reaching a threshold value and returning to the threshold value is greater than a critical value.

The filtered signal is investigated over a fixed period. The fixed period preferably commences after a fixed delay after the unfiltered signal has reached a threshold value.

Preferably, the signal of more than one engine cylinder is investigated. Preferably, the signal of each engine cylinder is investigated.

Preferably, the property of the combustion which is measured is the ionisation current.

By way of example only, a specific embodiment of the present invention will now be described, with reference to the accompanying drawings, in which:-

Fig. 1 is a diagrammatic representation of the apparatus used in the embodiment;

Figs. 2a and 2b are, respectively, graphs of the unfiltered and filtered ionisation current against crank angle;

Figs. 3a and 3b are, respectively, graphs of the unfiltered and filtered ionisation current against crank angle, with signal interruption during the measuring phase.

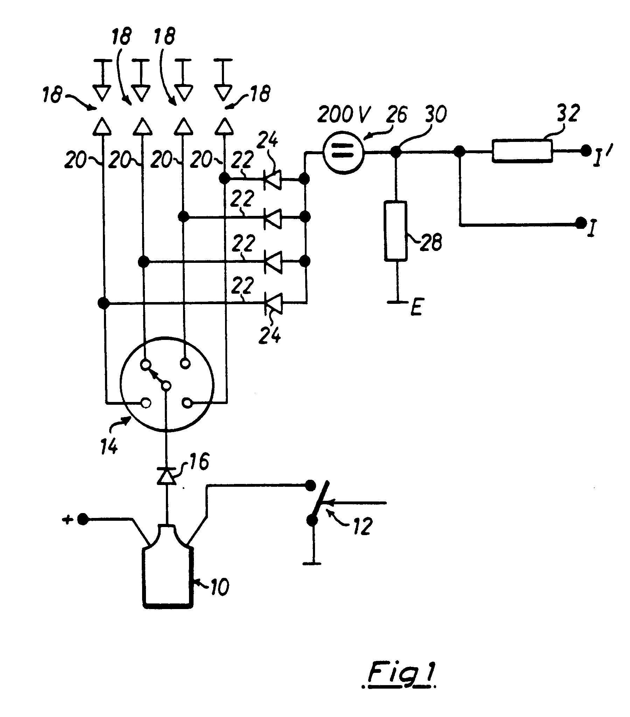

Referring firstly to Fig. 1, the apparatus employed is basically a conventional electrical system for an internal combustion engine comprising an ignition coil 10, contact breaker 12, ignition distributor 14 connected to the coil via a diode 16, and four spark plugs 18 connected to the distributor by high-tension leads 20. High tension leads 22 are connected to each of the high tension leads 20, and are connected to a common output, via respective diodes 24, to a source 26 of 200V potential difference, which forward biases the diodes 24. The output of the source is connected to earth E by a resistor 28.

Upon ignition of the fuel/air mixture in any one of the cylinders ions are formed, and following the decay of the ignition voltage of the associated spark plug, the associated diode 24 becomes temporarily conductive in its reverse direction, thus allowing an ionisation current to flow, which can be measured between an output 30 and earth E.

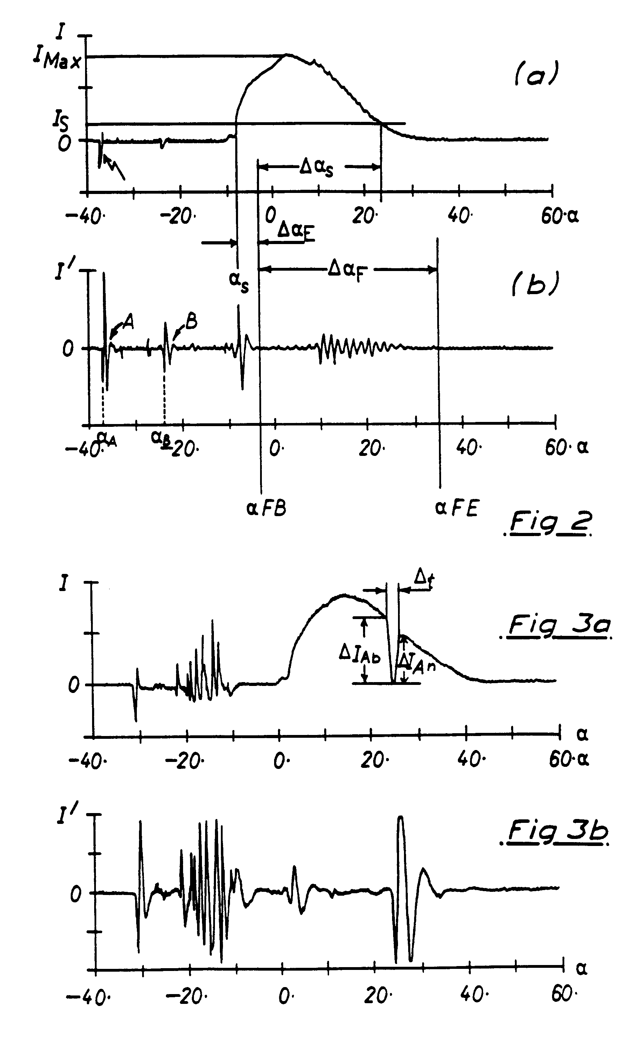

A typical measured current is shown in Fig. 2a which shows a graph of ionisation current (I) against crank angle ($\alpha$) (the crank angle corresponding to time). The current I is fed through a band pass filter 32 which lets through only those frequencies which occur during knocking (whether or not they are, in fact, due to knocking), and the resultant graph of filtered current (I') against crank angle is shown in Fig. 2b. Typical frequencies are those between 5kHz and 20kHz.

At a point $\alpha_s$ when the unfiltered ionisation current I reaches threshold value $I_s$ a sampling window for sampling the filtered signal which is initiated. Firstly, a fixed time interval $\Delta\alpha_E$ (filter transient time) is allowed to elapse, whereupon the sampling window itself is commenced at $\alpha_{FB}$. The unfiltered ionisation current I is sampled again to ensure that it is still greater than $I_s$ within a specific time limit $\Delta\alpha_{s\ crit}$, i.e. that $\Delta\alpha_s > \Delta\alpha_{s\ crit}$ and assuming that it is still above the threshold value within the appropriate time $I_s$ the filtered ionisation current I' is then evaluated and investigated in the window for a fixed crank range $\Delta\alpha_F$ which finishes at $\alpha_{FE}$. Alternatively, if $\Delta\alpha_s < \Delta\alpha_{s\ crit}$, $\alpha_s$ is rejected, the next instance of $\Delta\alpha_s > \Delta\alpha_{s\ crit}$ is sought within the cycle. The filtered ionisation current I' over the period $\Delta\alpha_F$ is checked in a known way (i.e. whether the peak value or rectified or integrated signal exceeds a critical value) to determine whether knocking has occurred. On the present example, knocking has, in fact, occurred.

It will be noted that two other noticable perturbations A and B occur in the filtered ionisation current signal I'. However, no sampling window is set up in either case, since the corresponding unfiltered ionisation currents $I_A$ and $I_B$ at crank angles $\alpha_A$ and $\alpha_B$ do not reach the threshold value $I_s$. By stipulating that the unfiltered current must reach a certain value before the filtered signal is investigated, two spurious investigations of the filtered signal have been avoided.

During the period that the filtered signal is investigated, the ionisation current I is checked for discontinuity, and particularly for signal intermissions. In particular, the signal I is checked to determine whether within a short period of time $\Delta t$ (which is less than a critical period $\Delta T$) any drop $\Delta I_{AG}$ in the signal I is greater than a critical value $\Delta I_{AGC}$ and then increases again by an amount $\Delta I_{An}$ which is greater than a critical amount $\Delta I_{AnC}$. This is illustrated in Fig. 3a, in which such conditions are fulfilled, and hence the sample window is discontinued.

The above conditions may be important, since rotation of the distributor 14 can lead to sparkovers in the distributor (due to resdiual energy in the ignition coil) even after decay of the ignition voltage at the spark plugs 18 and leads 20. The voltage in the leads 20 is thus increased briefly again and the high-voltage diodes 24 move from their conducting state to their blocking-state, resulting in a signal interruption in the measuring circuit. The interruptions only occur very briefly, since the residual energy in the coil is small. Although the interruptions are independent of the occurrence of knocking, they can cause interference in the band-pass filtered signal because of their steep gradients.

The ionisation current I is also checked to ensure that the signal maximum $I_{max}$ is below a critical value $I_{max\ crit}$. Also, the instant $\alpha_s$ at which the ionisation current I exceeds the threshold value $I_s$ is checked to ensure that it is before a critical value $\alpha_{e\ crit}$. Furthermore, as stated above, it is checked to see whether the time interval $\Delta\alpha_{s\ crit}$ - (the time or crank angle range between the current reaching and returning to the threshold value $I_s$) is reached.

If any of the above four conditions are not met, knocking detection for that combustion cycle is usually impossible. If any of the above conditions exceeds a certain frequency, a diagnostic signal is sent to trigger safety functions, for example to reduce the charging pressure of a turbocharger or to adjust the angle of ignition.

It is also possible, instead of measuring the ionisation current, to measure the radiant emittance which occurs during combustion. The filtered and unfiltered electrical signals from the detectors could then be processed in the same way as described above.

Also, it should be noted that the reference to a "period" in the description and claims is not necessarily a period of time, but may also be considered to be a crank angle range. Similarly, an "instant" in time may also be considered to be a particular crank angle.

The value, periods and thresholds may, of course, be altered under certain operating conditions such as load and speed.

## Claims

1. A method of detecting knocking in an internal combustion engine having a plurality of cylinders, comprising the steps of detecting a signal (I) related to a property of fuel combustion in at least one cylinder; filtering the detected signal (I) to get a signal (I') containing signal components that have characteristics associated with knocking; investigating the course of the unfiltered signal (I) to find whether the unfiltered signal (I) meets preset conditions, that conditions are that the unfiltered signal (I) reaches a threshold value ($I_s$) and after reaching the threshold value ($I_s$) the unfiltered signal (I) does not drop by a first critical amount ($\Delta I_{Ab\ crit}$) and then rise by a second critical amount ($\Delta I_{An\ crit}$) within a predetermined period ($\Delta T$) and only if all conditions of the detected signal (I) are met, then evaluating the filtered signal components (I') within a fixed period ($\Delta \alpha_F$)to determine an occurrence of knocking.

2. A method as claimed in claim 1, comprising sensing that the maximum unfiltered signal ($I_{max}$) is below a critical value as a further condition.

3. A method as claimed in any of claims 1 to 2, comprising sensing whether the instant ($\alpha_s$) when the signal (I) reaches a threshold value is before a critical value ($\alpha_{s\ crit}$) as a further condition.

4. A method as claimed in any of claims 1 to 3, comprising sensing whether the period ($\Delta \alpha_s$) between the signal reaching a threshold value ($I_s$) and returning to the threshold value ($I_s$) is greater than a critical value ($\Delta \alpha_{s\ crit}$) as a further condition.

5. A method as claimed in any of claims 1 to 4 wherein the fixed period commences after a fixed delay ($\Delta \alpha_E$) after the unfiltered signal has reached a threshold value ($I_s$).

6. A method as claimed in any of claims 1 to 5 wherein the unfiltered signal for more than one cylinder is detected.

7. A method as claimed in any of the preceding claims, wherein the property of the combustion which is measured is the ionisation current.

**Patentansprüche**

1. Verfahren zur Klopferkennung in einer mehrzylindrigen Brennkraftmaschine mit den Schritten: Messung eines Signales (I), das sich auf eine Kraftstoffverbrennung in wenigstens einem Zylinder bezieht, Filterung des gemessenen Signales (I) zum Erhalt eines Signales (I'), das Signalanteile enthält, die charakteristisch sind für Klopfen, Untersuchung des Verlaufes des ungefilterten Signales (I) zur Überprüfung ob das ungefilterte Signal (I) bestimmte Bedingungen erfüllt, wobei diese Bedingungen darin bestehen, daß das ungefilterte Signal (I) einen Schwellwert (Is) erreicht und nach dem Erreichen dieses Schwellwertes (Is) nicht um einen ersten kritischen Wert ($\Delta I_{Abcrit}$) abfällt und dann wieder ansteigt um einen zweiten kritischen Wert ($\Delta I_{Ancrit}$) innerhalb einer vorherbestimmten Zeitspanne ($\Delta T$), wobei nur bei Erfüllung aller Bedingungen für das gemessene Signal (I) das gefilterte Signal (I') innerhalb einer festen Periode ($\Delta \alpha_F$) ausgewertet wird, zur Erkennung des Klopfens.

2. Verfahren nach Anspruch 1, bei dem als weitere Bedingung geprüft wird, ob der Maximalwert des ungefilterten Signales ($I_{max}$) unterhalb einem kritischen Wert ist.

3. Verfahren nach Anspruch 1 oder 2, bei dem als weitere Bedingung geprüft wird ob der augenblickliche Winkel ($\alpha s$), der vorliegt, wenn das Signal (I) einen Schwellwert erreicht, vor einem kritischen Wert ($\alpha scrit$) ist.

4. Verfahren nach einem der Ansprüche 1 bis 3, bei dem als weitere Bedingung geprüft wird ob die Spanne ($\Delta \alpha s$) zwischen dem Erreichen des Schwellwertes (Is) durch das Signal und dem Unterschreiten des Schwellwertes (Is) durch das Signal größer ist als ein kritischer Wert ($\Delta \alpha_{scrit}$).

5. Verfahren nach einem der vorhergehenden Ansprüche 1 bis 4, bei dem die feste Periode nach einer festen Verschiebung ($\Delta \alpha_E$) nach der das ungefilterte Signal einen Schwellwert (Is) erreicht hat, beginnt.

6. Verfahren nach einem der Ansprüche 1 bis 5, bei dem das ungefilterte Signal für mehr als einen Zylinder untersucht wird.

7. Verfahren nach einem der vorhergehenden Ansprüche, bei dem die Eigenschaft der Verbrennung, die untersucht wird, der Ionisationsstrom ist.

**Revendications**

1. Procédé de détection de cognements dans un moteur à combustion interne comportant plusieurs cylindres, procédé caractérisé en ce qu'il comprend les différentes étapes consistant à détecter un signal (I) lié à une propriété de combustion du carburant dans au moins l'un des cylindres ; à filtrer le signal détecté (I) pour obtenir un signal (I') contenant des composantes de signal présentant des caractéristiques associées aux cognements, examiner l'évolution du signal non-filtré (I) pour trouver si ce signal non-filtré (I) répond à des conditions prédéterminées, ces conditions étant que le signal non-filtré (I) atteigne une valeur de seuil ($I_s$), et qu'après avoir atteint la valeur de seuil ($I_s$), le signal non-filtré (I) ne chute pas d'une première quantité critique ($\Delta I_{Ab\ crit}$) et monte ensuite d'une seconde quantité critique ($\Delta I_{An\ crit}$) à l'intérieur d'une période prédéterminée ($\Delta T$) et seulement si toutes les conditions du signal détecté (I) sont satisfaites ; puis évaluer ensuite les composantes du signal filtré (I') à l'intérieur d'une période fixe ($\Delta \alpha_f$) pour déterminer une apparition de cognements.

2. Procédé selon la revendication 1, caractérisé en ce qu'il consiste à détecter, comme autre condition, que le signal non-filtré maximum ($I_{max}$) est inférieur à une valeur critique.

3. Procédé selon l'une quelconque des revendications 1 et 2, caractérisé en ce qu'il consiste à détecter, comme autre condition, si l'instant ($\alpha_s$) où le signal (I) atteint une valeur de seuil, se situe avant une valeur critique ($\alpha_{s\ crit}$).

4. Procédé selon l'une quelconque des revendications 1 à 3, caractérisé en ce qu'il consiste, comme autre condition, à détecter si la période ($\Delta \alpha_s$) comprise entre le moment où le signal atteint une valeur de seuil ($I_s$) et le moment où le signal retourne à la valeur de seuil ($I_s$), est supérieur à une valeur critique ($\Delta \alpha_{s\ crit}$).

5. Procédé selon l'une quelconque des revendications 1 à 4, caractérisé en ce que la période fixe commence au bout d'un retard fixe ($\Delta \alpha_E$) après que le signal non-filtré ait atteint une valeur de seuil ($I_s$).

6. Procédé selon l'une quelconque des revendications 1 à 5, caractérisé en ce qu'on détecte le signal non-filtré pour plus d'un seul cylindre.

7. Procédé selon l'une quelconque des revendications précédentes, caractérisé en ce que la propriété de la combustion qu'on mesure est le courant d'ionisation.

_Fig 1_

$(a)$

$I$
$I_{Max}$
$I_S$
$0$
$\Delta\alpha_S$
$-40\cdot$ $-20\cdot$ $0$ $20\cdot$ $40\cdot$ $60\cdot\alpha$

$\Delta\alpha_E$

$(b)$

$I'$
$A$
$B$
$\alpha_S$
$\Delta\alpha_F$
$0$
$-40\cdot$ $\alpha_A$ $\alpha_B$ $-20\cdot$ $0\cdot$ $20\cdot$ $40\cdot$ $60\cdot\alpha$
$\alpha FB$ $\alpha FE$

Fig 2

$I$
$\Delta_f$
Fig 3a
$\Delta I_{Ab}$
$\Delta I_{An}$
$0$
$-40\cdot$ $-20\cdot$ $0\cdot$ $20\cdot$ $40\cdot$ $60\cdot\alpha$
$\alpha$

$I'$
Fig 3b
$0$
$-40\cdot$ $-20\cdot$ $0\cdot$ $20\cdot$ $40\cdot$ $60\cdot$
$\alpha$